# EUROPÄISCHE PATENTSCHRIFT

(11) **EP 2 678 611 B1**
(45) Veröffentlichungstag und Bekanntmachung des Hinweises auf die Patenterteilung: **24.02.2016**
(21) Anmeldenummer: 12705864.2
(22) Anmeldetag: 24.02.2012
(51) Int. Cl.: H01M 8/04, F24D 5/04, F24F 12/00

(54) **LÜFTUNGS- UND HEIZSYSTEM**
VENTILATION AND HEATING SYSTEM
SYSTÈME DE VENTILATION ET DE CHAUFFAGE

(30) Priorität: 25.02.2011 DE 102011004734; 27.05.2011 DE 102011076650
(43) Veröffentlichungstag der Anmeldung: 01.01.2014
(73) Patentinhaber: Heliocentris Energiesysteme GmbH, 12489 Berlin (DE)
(72) Erfinder: HIERL, Andreas, 12435 Berlin (DE); HILLE, André, 12437 Berlin (DE); RADUE, Dirk, 12685 Berlin (DE)
(74) Vertreter: Eisenführ Speiser
(86) Internationale Anmeldenummer: PCT/EP2012/053210
(87) Internationale Veröffentlichungsnummer: WO 2012/113932

(56) Entgegenhaltungen:
- EP-A1- 0 908 683
- DE-A1- 10 302 217
- DE-U1- 8 809 074

## Beschreibung

Die Erfindung betrifft ein Lüftungs- und Heizsystem insbesondere für Aufenthaltsräume wie Wohnräume oder dergleichen.

Aufgabe solcher Lüftungs- und Heizsysteme ist es, ein Raumklima herzustellen, das sowohl hinsichtlich der im Raum herrschenden Lufttemperatur (Raumtemperatur) als auch der im Aufenthaltsraum herrschenden Luftfeuchtigkeit beispielsweise so eingestellt ist, dass sich in dem Aufenthaltsraum aufhaltende Menschen wohl fühlen. Ein Problem ist dabei, dass die Raumluft im Winter typischerweise geheizt werden muss und dass außerdem von sich im Aufenthaltsraum aufhaltenden Menschen abgegebene Feuchtigkeit abgeführt werden muss, so dass ein Luftwechsel auch bei ungünstigen Außentemperaturen notwendig ist.

Aus DE 103 02 217 A1 ist eine Luftheizung mit integrierter Wärmeübertragung aus Abluft und Brenner bekannt.

Aufgabe der Erfindung ist es, ein Lüftungs- und Heizsystem anzugeben, das die Anforderungen an ein solches System möglichst wirtschaftlich und energetisch günstig erfüllt. Erfindungsgemäß wird diese Aufgabe durch ein Lüftungs- und Heizsystem gelöst, welches ein Lüftungsgerät in Verbindung mit einer Brennstoffzelleneinheit enthält, wobei das Lüftungsgerät von außerhalb des Aufenthaltsraums stammende Außenluft in einem ersten Luftstrang über einen Wärmetauscher der Brennstoffzelleneinheit und gegebenenfalls dem Aufenthaltsraum direkt als Zuluft zuführt, während Abluft aus der Brennstoffzelleneinheit zusammen mit Abluft aus dem Aufenthaltsraum einem zweiten Luftstrang des Lüftungsgerätes zugeführt und in diesem über den Wärmetauscher des Lüftungsgerätes als Fortluft nach außen abgeführt wird. Die dem Lüftungsgerät zugeführte Außenluft wird über den ersten Luftstrang des Lüftungsgerätes über den gleichen Wärmetauscher geführt, über den jeweils Abluft in dem zweiten Luftstrang des Lüftungsgerätes eintretende und aus dem Lüftungsgerät als Fortluft austretende Luft geführt wird.

Die Brennstoffzelleneinheit enthält einen Brennstoffzellenstack mit einer offenen Kathode, bei der die Kühlluft für die Kathode und die Reaktionsluft ein und derselbe Volumenstrom sind, über den auch das bei der Reaktion in der Brennstoffzelleneinheit entstehende Wasser als Luftfeuchte wieder abgeführt wird. Erfindungsgemäß wird diese Luftfeuchte dazu genutzt, durch das Lüftungsgerät erwärmte Außenluft derart mit feuchter Abluft aus dem Brennstoffzellensystem zu ergänzen, dass die dem Aufenthaltsraum zuzuführende Zuluft sowohl eine gewünschte Lufttemperatur als auch eine gewünschte Luftfeuchtigkeit aufweisen.

Um die dem Aufenthaltsraum zuzuführende Zuluft im Sommer gegebenenfalls kühlen zu können, kann dem ersten Luftstrang des Lüftungsgerätes auch eine Kühleinheit nachgeschaltet sein. Diese kann beispielsweise einen zweiten Wärmtauscher und eine mit diesem verbundenen Kältemaschine aufweisen. Die Kältemaschine ist vorzugsweise eine Kompressionskältemaschine.

Die Brennstoffzelle der Brennstoffzelleneinheit besitzt vorzugsweise Proton-Exchange-Membranen, so dass die Brennstoffzelle eine PEM-Brennstoffzelle ist.

Weitere vorteilhafte Gestaltungsvarianten des erfindungsgemäßen Lüftungs- und Heizsystems ergeben sich aus der nachfolgenden Beschreibung von Ausführungsbeispielen mit Bezug auf die Abbildungen. Diese zeigen in
Abbildung 1: eine schematische Darstellung eines Lüftungs- und Heizsystems mit einer Brennstoffzelle, die einen Brennstoffzellenstack mit offener Kathode besitzt;
Abbildung 2: eine schematische Darstellung eines Lüftungs- und Heizsystems ähnlich Abb. 1 mit einer zusätzlichen Bypassklappe, die den Wärmetauscher im Zuluftstrang des Lüftungsgerätes überbrückt; und
Abbildung 3: ein Lüftungs- und Heizsystem ähnlich Abb. 1, bei dem im Abluftstrang der Brennstoffzelleneinheit ein Luft/Wasserwärmetauscher vorgesehen ist, dessen Wasserseite über einen Kreislauf mit einer Wärmesenke zum Beispiel einem Warmwasserspeicher verbunden ist.

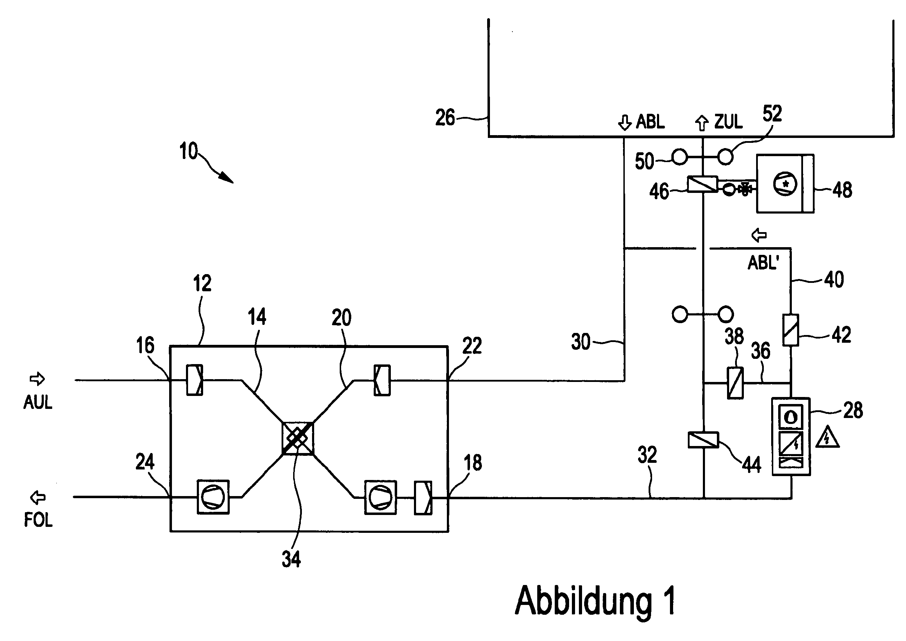

Das in der Abbildung 1 gezeigte Lüftungs- und Heizsystem 10 weist ein Lüftungsgerät 12 auf, das einen ersten Luftstrang 14 von einem Außenluftanschluss 16 zu einem Zuluftanschluss 18 sowie einen zweiten Luftstrang 20 von einem Abluftanschluss 22 zu einem Fortluftanschluss 24 aufweist. Von diesen Anschlüssen stehen dem Betrieb der Außenluftanschluss 16 und der Fortluftanschluss 24 mit der Umgebung eines Aufenthaltsraumes in Verbindung, nicht mit dem Aufenthaltsraum 26 selbst.

Der Abluftanschluss 22 ist über einen Abluftstrang 30 mit dem Aufenthaltsraum 26 verbunden genauso wie der Zuluftanschluss 18 sowohl direkt über einen Zuluftstrang 32 als auch indirekt über eine Brennstoffzelleneinheit 28 mit dem Aufenthaltsraum 26 in Verbindung steht.

Sowohl der erste Lüftungsstrang 14 des Lüftungsgerätes 12 als auch der zweite Lüftungsstrang 20 des Lüftungsgerätes 12 sind über einen Wärmetauscher 34 des Lüftungsgerätes 12 geführt, so dass ein Wärmeaustausch zwischen den über die beiden Luftstränge 14 und 20 geführten Luftströmen stattfindet. Im Winter kann beispielsweise über den zweiten Luftstrang 20 geführte Ab- bzw. Fortluft ihre Wärme an über den ersten Luftstrang 14 geführte Außen- bzw. Zuluft übertragen, so dass wenigstens ein Teil der ansonsten mit dem Fortluftstrom abgeführten Wärmeenergie der Raumluft wiedergewonnen und dem Aufenthaltsraum 26 zurückgeführt werden kann.

Die Brennstoffzelleneinheit 28 ist eingangsseitig über einen Teil des Zuluftstrangs 32 mit dem Zuluftanschluss 18 des Lüftungsgerätes 12 verbunden und wird so mit frischer Zuluft versorgt, die gleichzeitig sowohl für die Reaktion mit dem Wasserstoff in der Brennstoffzelle der Brennstoffzelleneinheit 28 benötigt wird als auch als Kühlluft zum Abführen der bei der Reaktion entstehenden Wärme. Die Brennstoffzelle der Brennstoffzelleneinheit 28 besitzt Proton-Exchange-Membranen (PEM Membranen) der der Reaktionsluftstrom und Kühlluftstrom nicht separat, sondern in einem Luftstrom zugeführt werden. Dieser Luftstrom durch die Brennstoffzelleneinheit 28 nimmt in Folge der Reaktion in der Brennstoffzelle entstehendes Wasser auf und wird somit befeuchtet. Der aus der Brennstoffzelleneinheit 28 austretende, warme und feuchte Luftstrom wird jeweils ganz oder teilweise dem Zuluftstrang 28 und/oder dem Abluftstrang 30 zugeführt.

Wenn die aus dem Lüftungsgerät 12 austretende Zuluft trockener ist, als die gewünschte Raumluft, wenn ihr also Feuchtigkeit zugeführt werden muss, wird dieser Zuluft ein Teil oder die ganze aus der Brennstoffzelleneinheit 28 austretenden Luft zugeführt. Hierzu ist der Ausgang der Brennstoffzelleneinheit 28 über einen ersten Brennstoffzellenausgangsstrang 36 mit einer Rückschlagklappe 38 mit dem Zuluftstrang 32 verbunden.

Wenn hingegen die aus dem Lüftungsgerät 14 austretende Zuluft 18 bereits feucht genug ist, wird die aus der Brennstoffzelleneinheit 28 austretende Luft über einen zweiten Brennstoffzellenaustrittsstrang 40 gesteuert über eine in diesem angeordnete Lüftungsklappe 42 dem Abluftstrang 30 zugeführt und somit zum Lüftungsgerät 12 zurückgeführt. Dies hat den Vorteil, dass die mit dem aus der Brennstoffzelleneinheit 28 austretende Luft abgeführte Reaktionswärme mit dem Abluftstrom durch den Wärmetauscher 34 des Lüftungsgerätes 12 geführt wird, so dass auch diese Wärmeenergie dem Abluftstrom wenigstens teilweise wieder entzogen und dem Zuluftstrom zugeführt werden kann.

Im Zuluftstrang 32 ist eine zweite Rückschlagklappe 44 angeordnet. Aufgrund der Rückschlagklappen 38 und 44 kann über die steuerbare Lüftungsklappe 42 ebenfalls eingestellt werden, wie viel der aus dem Lüftungsgerät 12 austretenden Zuluft direkt dem Aufenthaltsraum 26 zugeführt und wie viel der Luft der Brennstoffzelleneinheit 28 und somit gegebenenfalls indirekt der Raumluft im Aufenthaltsraum 26 zugeführt wird.

Je nach Einsatzort und zu erwartenden Temperaturen kann im Zuluftstrang 32 eine Kühleinheit vorgesehen sein, die einen unmittelbar im Zuluftstrang 32 angeordneten Kühlwärmetauscher 46 sowie ein mit diesem verbundenes Kühlaggregat 48 aufweist. Das Kühlaggregat 48 kann beispielsweise eine Kompressionskältemaschine sein.

Die Kühleinheit ist in einem Abschnitt des Zuluftstrangs 32 angeordnet, der stromab desjenigen Ortes liegt, an dem der erste Brennstoffzellenausgangsstrang 36 auf den Zuluftstrang 32 trifft.

Bei der bis hierhin beschriebenen wärmegeführten Betriebsweise erfolgt die Steuerung des Lüftungs- und Heizsystems 10 und insbesondere der Lüftungsklappe 42 geführt durch die Lufttemperatur und die Luftfeuchtigkeit im Aufenthaltsraum 26. Für die Steuerung sind am Ende Zuluftstrangs 32 eine Luftfeuchtesensor 50 und ein Lufttemperatursensor 52 angeordnet.

Alternativ zu einem wärmegeführten Betrieb kann das Lüftungs- und Heizsystem 10 auch in einem stromgeführten Betrieb betrieben werden, bei dem das Lüftungs- und Heizsystem 10 als Regelkraftwerk funktioniert und die Leistungsaufnahme oder Leistungsabgabe des Lüftungs- und Heizsystems 10 so eingestellt wird, wie es von Seiten des Stromnetzes aus zum Ausgleich von Lastschwankungen wünschenswert ist. In solch einem Fall ggf. zu viel produzierte Wärme kann dann über den zweiten Brennstoffzellenaustrittsstrang 40, den Abluftstrang 30 und das Lüftungsgerät 12 an die Umgebung abgegeben werden.

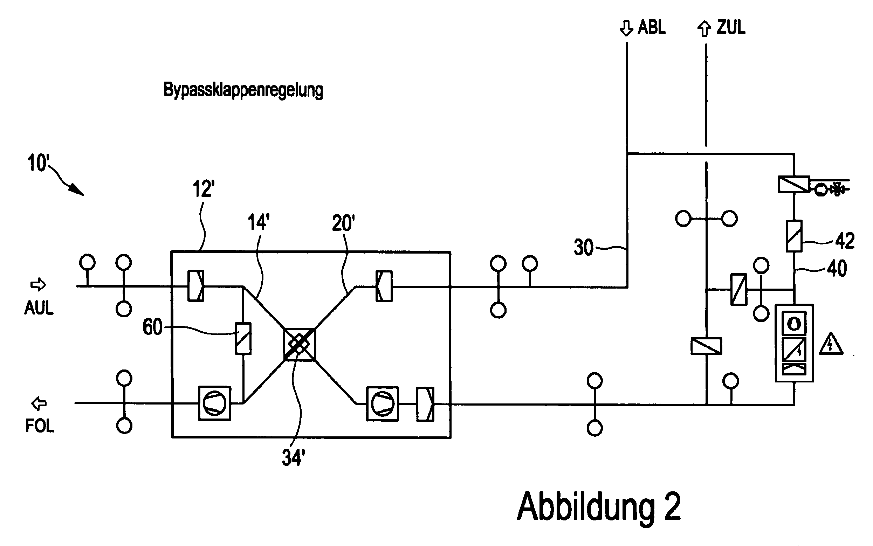

Die in Abb. 2 abgebildete Ausführungsvariante eines Lüftungs- und Heizsystems 10' unterscheidet sich von der in Abb. 1 abgebildeten Variante dadurch, dass an dem Lüftungsstrang 14' des Lüftungsgerätes 12' eine Bypassklappe 60 vorgesehen ist, die den Wärmetauscher 34' des Lüftungsgerätes 12' überbrückt. Diese Bypassklappe 60 ist so angesteuert, dass der im zweiten Lüftungsstrang 20' geführten Fortluft gerade nur so viel Wärme entzogen wird, dass es auf keinen Fall zu einem Einfrieren des Lüftungsgerätes 12' kommt. Bei niedrigen Temperaturen wird somit ein Teil oder auch die ganze über den ersten Luftstrang 14' geführte Außen- bzw. Zuluft an dem Wärmetauscher 34' vorbeigeführt, sodass der Wärmetauscher 34' nicht beispielsweise in Folge gefrierenden Kondenswassers einfriert.

Eine derart angesteuerte Bypassklappe 60 macht eine ansonsten eventuell erforderliche Frostschutzheizung überflüssig, die sich bei Unterschreiten einer bestimmten Außentemperatur (z. B. 0°C) über ein Thermostat einschaltet und so die Außenluft elektrisch vorheizt. Eine derartige Frostschutzheizung würde nämlich den Wärmerückgewinnungsgrad reduzieren und zu zusätzlichen Energiekosten führen.

Für den Betrieb des in Abb. 2 dargestellten Lüftungs- und Heizsystems ergeben sich beispielsweise die zwei nachfolgend erläuterten Varianten:

Entweder wird die im ersten Luftstrang 14' geführte kalte Außen- bzw. Zuluft mittels der Bypassklappe 60 zum Teil an dem Luft-Luft-Wärmetauscher 34' vorbeigeführt. In diesem Fall muss die Brennstoffzelle der Brennstoffzelleneinheit 28 die im ersten Luftstrang 14 geführte Außen- bzw. Zuluft aufgrund der geringeren Zulufttemperatur etwas mehr nachheizen. Besitzt die Brennstoffzelleneinheit 28 eine Brennstoffzelle mit offener Kathode und wird die Abluft aus der Brennstoffzelleneinheit 28 direkt der Zuluft beigemischt, so wird dann die Zuluft an trockenen Wintertagen auch stärker befeuchtet, was wünschenswert ist.

Oder der Abluftstrom aus dem Aufenthaltsraum 26 und der über die Lüftungsklappe 42 geführte Abluftstrom aus der Brennstoffzelleneinheit 28 wird so angehoben, dass die über den zweiten Luftstrang 20 geführte Ab- bzw. Fortluft eine Temperatur oberhalb der Frostgrenze behält. Dadurch kann ein guter Wärmerückgewinnungsgrad beibehalten werden.

Die in Abb. 2 dargestellte Ausführungsvariante erlaubt es, auf typischerweise erforderliche Frostschutzheizungen zu verzichten und somit energieeffizienter zu arbeiten, ohne den Komfort der Lüftungsanlage zu beinträchtigen. Zusätzlich kann im Falle einer Brennstoffzelleneinheit 28 mit einer Brennstoffzelle mit offener Kathode mit Hilfe der Bypassklappe 60 die Luftfeuchtigkeit, die in den Aufenthaltsraum 26 gelangen soll, eingestellt werden, ohne dazu eine Lüfterdrehzahl verändern zu müssen.

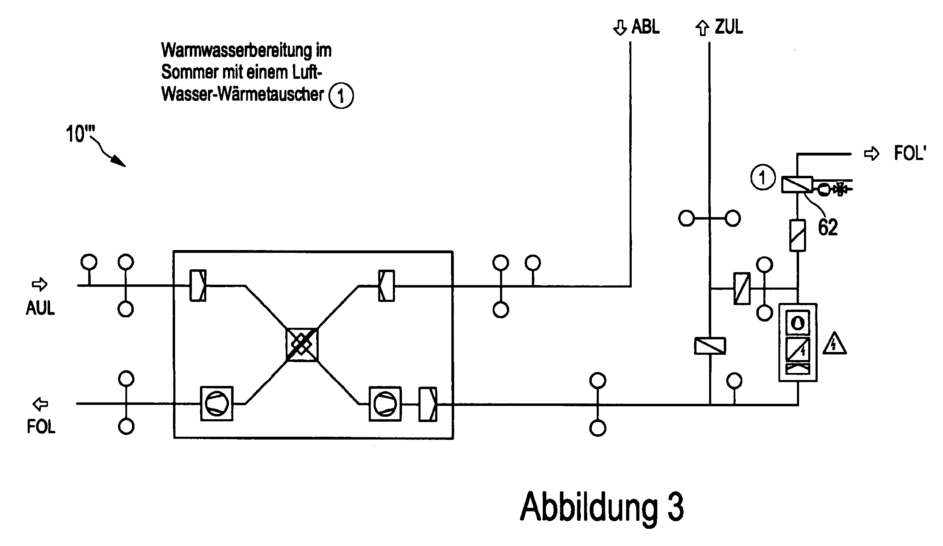

Die in Abb. 3 dargestellte Ausführungsvariante eines Lüftungs- und Heizsystems 10" unterscheidet sich von dem in Abb. 1 dargestellten Lüftungs- und Heizsystem dadurch, dass an Stelle oder zusätzlich zum Kühlwärmetauscher 46 ein im Abluftstrom (beispielsweise im Brennstoffzellenaustrittsstrang 40) angeordnete Luft-Wasser-Wärmetauscher 62 vorgesehen ist, dessen Luftseite von der Abluft aus der Brennstoffzelleneinheit 28 durchströmt wird und dessen Wasserseite über einen Kreislauf mit einer Wärmesenke, z. B. einem Warmwasserspeicher, verbunden ist.

Die in Abb. 3 abgebildete Ausführungsvariante ist beispielsweise im Falle von Niedrigenergiehäusern vorteilhaft, die eh immer eine Lüftungsanlage besitzen, und im Sommer zwar keine Heizwärme benötigen, aber elektrische Energie und eine Brauchwassererwärmung benötigen. In diesem Fall kann die Brennstoffzelleneinheit 28 sowohl die erforderliche elektrische Energie als auch die Wärme für die Brauchwassererwärmung liefern. Somit kann bei einem Überangebot an Abwärme aus der Brennstoffzelleneinheit 28 diese Wärme teilweise noch ausgekoppelt und z. B. für die Brauchwassererwärmung benutzt werden. Der Nutzungsgrad des Wasserstoffs im stromgeführten Betrieb der Brennstoffzelleneinheit 28 wird somit erhöht.

Diese Betriebsweise ist auch in der Übergangszeit (beispielsweise im Frühling und im Herbst) möglich, weil ein kleiner Teil der Wärmeenergie der Abluft aus der Brennstoffzelleneinheit 28 direkt zur Beheizung die im Aufenthaltsraum 26 zugeführt wird und die restliche Wärme über den Luft-Wasser-Wärmetauscher 62 und beispielsweise einen an diesen angeschlossenen Warmwasserspeicher weggespeichert werden kann.

Es versteht sich, dass die in Abb. 2 dargestellte Bypassklappe 60 und/oder der in der Abb. 3 dargestellte Luft-Wasser-Wärmetauscher 62 jeweils einzeln oder kombiniert miteinander in dem in Abb. 1 dargestellten Lüftungs- und Heizsystem integriert sein können.

## Patentansprüche

1. Lüftungs- und Heizsystem (10) für einen Aufenthaltsraum (26), welches ein Lüftungsgerät (12) und eine Brennstoffzelleneinheit (28) aufweist, die so angeordnet und miteinander verbunden sind, dass das Lüftungsgerät (12) von außerhalb eines jeweiligen Aufenthaltsraums (26) stammende Außenluft in einem ersten Luftstrang (14) über einen Wärmetauscher (34) in einem einstellbaren Verhältnis zwischen direkter und indirekter Zuluft sowohl als direkte Zuluft einem jeweiligen Aufenthaltsraum (26) zuführen kann als auch als indirekte Zuluft zunächst der Brennstoffzelleneinheit (28) und über diese gegebenenfalls indirekt dem jeweiligen Aufenthaltsraum (26) zuführen kann, wobei die Brennstoffzelleneinheit (28) so mit dem Lüftungsgerät (12) und einem jeweiligen Aufenthaltsraum (26) verbundene sein kann dass ein aus der Brennstoffzelleneinheit (28) austretender Luftstrom in einem einstellbaren Verhältnis einerseits als Zuluft einem jeweiligen Aufenthaltsraum (26) zugeführt werden kann und/oder andererseits als Abluft zusammen mit aus einem jeweiligen Aufenthaltsraum (26) stammender Abluft einem zweiten Luftstrang (20) des Lüftungsgerätes (12) zugeführt werden kann, wobei der zweite Luftstrang (20) des Lüftungsgerätes (12) über den Wärmetauscher (34) des Lüftungsgerätes (12) mit dem ersten Luftstrang (14) wärmegekoppelt ist, so dass über den zweiten Luftstrang (20) nach außen geführte Abluft wenigstens einen Teil der in ihr enthaltenen Wärmeenergie über den Wärmetauscher (34) des Lüftungsgerätes (12) an den ersten Luftstrang (14) und darin geführter Zuluft für einen jeweiligen Aufenthaltsraum (26) und die Brennstoffzelleneinheit (28) abgeben kann.

2. Lüftungs- und Heizsystem gemäß Anspruch 1, **dadurch gekennzeichnet, dass** die Brennstoffzelleneinheit eine oder mehrere Brennstoffzellen mit einer oder mehreren Proton-Exchange-Membranen (PEM Membranen) aufweist.

3. Lüftungs- und Heizsystem gemäß Anspruch 1 oder 2, **dadurch gekennzeichnet, dass** in dem Zuluftstrang (32) eine Kühleinheit (48) angeordnet ist.

4. Lüftungs- und Heizsystem gemäß Anspruch 3, **dadurch gekennzeichnet, dass** die Kühleinheit (48) einen unmittelbar im Zuluftstrang angeordneten Kühlwärmetauscher (46) sowie ein mit diesem verbundenes Kühlaggregat aufweist

5. Lüftungs- und Heizsystem gemäß einem der Ansprüche 1 bis 4, **dadurch gekennzeichnet, dass** das Lüftungs- und Heizsystem einen Luft-Wasser-Wärmetauscher (62) aufweist, der so angeordnet ist, dass die Luftseite des Luft-Wasser-Wärmetauschers von aus der Brennstoffzelleneinheit (28) austrettender Brennstoffzellenabuft durchströmt wird, wobei die Wasserseite des Luft-Wasser-Wärmetauschers mit einem Wärmespeicher verbunden ist.

6. Lüftungs- und Heizsystem gemäß einem der Ansprüche 1 bis 5, **dadurch gekennzeichnet, dass** das Lüftungsgerät (12') eine Bypassklappe (60) aufweist, die so angeordnet ist, dass sie in dem ersten Luftstrang (14') geführte Außenluft wahlweise ganz oder teilweise an dem Wärmetauscher (34') des Lüftungsgerätes (12') vorbeiführen kann wobei die Bypassklappe (60) in Abhängigkeit einer Außenlufttemperatur und ggf. einer Fortlufttemperatur so angesteuerbar ist, dass der im zweiten Lüftungsstrang geführten Fortluft nur so viel Wärme entzogen wird, dass es nicht zu einem Einfrieren des Lüftungsgerätes (12') kommt.

## Claims

1. Ventilation and heating system (10) for a living space (26), comprising a ventilation device (12) and a fuel cell unit (28) which are arranged and interconnected such that the ventilation device (12) can supply ambient air, originating from outside a particular living space (26), in a first air line (14) via a heat exchanger (34), in an adjustable ratio of direct to indirect ingoing air, both as direct ingoing air to a particular living space (26) and as indirect ingoing air first to the fuel cell unit (28) and, via said unit, optionally indirectly to the particular living space (26), wherein the fuel cell unit (28) can be connected to the ventilation device (12) and to a particular living space (26) in such a way that an airflow leaving the fuel cell unit (28) can be supplied, in an adjustable ratio, as ingoing air to a particular living space (26) and/or can be supplied, together with outgoing air originating from a particular living space (26), as outgoing air to a second air line (20) of the ventilation device (12), wherein the second air line (20) of the ventilation device (12) is thermally coupled to the first air line (14) by means of the heat exchanger (34) of the ventilation device (12), and therefore, by means of the heat exchanger (34) of the ventilation device (12), outgoing air conducted to the outside via the second air line (20) can give up at least some of the thermal energy contained therein to the first air line (14) and to ingoing air, conducted in said first air line, for a particular living space (26) and the fuel cell unit (28).

2. Ventilation and heating system according to claim 1, **characterised in that** the fuel cell unit comprises one or more fuel cells having one or more proton exchange membranes (PEM membranes).

3. Ventilation and heating system according to either claim 1 or claim 2, **characterised in that** a cooling unit (48) is arranged in the ingoing air line (32).

4. Ventilation and heating system according to claim 3, **characterised in that** the cooling unit (48) comprises a cooling heat exchanger (46) arranged directly in the ingoing air line and a cooling assembly connected to said cooling heat exchanger.

5. Ventilation and heating system according to any of claims 1 to 4, **characterised in that** the ventilation and heating system comprises an air/water heat exchanger (62) which is arranged such that outgoing fuel cell air leaving the fuel cell unit (28) flows through the air side of the air/water heat exchanger, the water side of the air/water heat exchanger being connected to a heat accumulator.

6. Ventilation and heating system according to any of claims 1 to 5, **characterised in that** the ventilation device (12') comprises a bypass damper (60) which is arranged in such a way that it can conduct either all or some of the ambient air, conducted in the first air line (14'), past the heat exchanger (34') of the ventilation device (12'), the bypass damper (60) being controllable depending on an ambient air temperature and optionally on an exhaust air temperature, such that only so much heat is withdrawn from the exhaust air, conducted in the second air line, to prevent the ventilation device (12') from freezing.

## Revendications

1. Système de ventilation et de chauffage (10) pour un espace de séjour (26), comprenant un appareil de ventilation (12) et une unité de pile à combustible (28), lesquels sont disposés et reliés entre eux de telle manière que l'appareil de ventilation (12) peut amener dans une première ligne d'air (14) de l'air extérieur provenant de l'extérieur de l'espace de séjour (26) correspondant, via un échangeur de chaleur (34), dans un rapport réglable entre air amené direct et indirect, aussi bien comme air amené directement à l'espace de séjour (26) correspondant que comme air amené indirectement, tout d'abord à l'unité de pile à combustible (28), et le cas échant par celle-ci indirectement à l'espace de séjour (26) correspondant, l'unité de pile à combustible (28) pouvant être reliée à l'appareil de ventilation (12) et à l'espace de séjour (26) correspondant de telle manière qu'un flux d'air sortant de l'unité de pile à combustible (28) peut être amené dans un rapport réglable, d'une part comme air amené à l'espace de séjour (26) correspondant, et/ou d'autre part comme air évacué à une deuxième ligne d'air (20) de l'appareil de ventilation (12) avec de l'air évacué provenant de l'espace de séjour (26) correspondant, la deuxième ligne d'air (20) de l'appareil de ventilation (12) étant thermiquement couplée par l'échangeur de chaleur (34) de l'appareil de ventilation (12) à la première ligne d'air (14), si bien que l'air évacué conduit vers l'extérieur par la deuxième ligne d'air (20) peut fournir par l'intermédiaire de l'échangeur de chaleur (34) de l'appareil de ventilation (12) au moins une partie de l'énergie thermique qu'il contient à la première ligne d'air (14) et à l'air amené que celle-ci contient pour l'espace de séjour (26) correspondant et l'unité de pile à combustible (28).

2. Système de ventilation et de chauffage selon la revendication 1, **caractérisé en ce que** l'unité de pile à combustible comprend une ou plusieurs piles à combustible avec une ou plusieurs membranes d'échange de protons (membranes PEM).

3. Système de ventilation et de chauffage selon la revendication 1 ou 2, **caractérisé en ce qu'**une unité de refroidissement (48) est disposée dans la ligne d'amenée d'air (32).

4. Système de ventilation et de chauffage selon la revendication 3, **caractérisé en ce que** l'unité de refroidissement (48) comporte un échangeur de chaleur pour refroidissement (46) disposé directement dans la ligne d'amenée d'air ainsi qu'un agrégat de refroidissement relié à celui-ci.

5. Système de ventilation et de chauffage selon l'une des revendications 1 à 4, ledit système de ventilation et de chauffage étant **caractérisé en ce qu'**il comprend un échangeur de chaleur eau-air (62), lequel est disposé de telle manière que le côté air de l'échangeur de chaleur eau-air soit exposé à l'air évacué de pile à combustible sortant de l'unité de pile à combustible (28), le côté eau de l'échangeur de chaleur eau-air étant relié à un accumulateur de chaleur.

6. Système de ventilation et de chauffage selon l'une des revendications 1 à 5, **caractérisé en ce que** l'appareil de ventilation (12') comporte un clapet de dérivation (60) disposé de manière à pouvoir faire passer, sélectivement en totalité ou en partie, l'air extérieur conduit dans la première ligne d'air (14') devant l'échangeur de chaleur (34') de l'appareil de ventilation (12'), ledit clapet de dérivation (60) pouvant être commandé en fonction d'une température d'air extérieur et le cas échéant d'une température d'air d'échappement, de telle manière que le prélèvement de chaleur dans l'air d'échappement conduit dans la deuxième ligne de ventilation soit effectué suivant une quantité n'entraînant pas le gel de l'appareil de ventilation (12').
